# FASCICULE DE BREVET EUROPEEN

(11) **EP 0 286 496 B1**
(45) Date de publication et mention de la délivrance du brevet: **17.02.1993**
(21) Numéro de dépôt: 88400701.4
(22) Date de dépôt: 23.03.1988
(51) Int. Cl.: G02B 27/00

(54) **Viseur binoculaire, holographique et à grand champ, utilisable sur casque**
Binokulare, auf einem Helm montierbare Weitwinkelanzeige
Helmet-mounted, binocular, holographic view finder with wide field of vision

(30) Priorité: 31.03.1987 FR 8704484
(43) Date de publication de la demande: 12.10.1988
(73) Titulaire: THOMSON-CSF, 75008 Paris (FR)
(72) Inventeur: Antier, Catherine, F-75008 Paris (FR); Migozzi, Jean-Blaise, F-75008 Paris (FR)
(74) Mandataire: Courtellemont, Alain

(56) Documents cités:
- EP-A- 0 007 039
- EP-A- 0 077 193
- EP-A- 0 170 523
- PROCEEDINGS OF THE IEEE 1981, NATIONAL AEROSPACE AND ELECTRONICS CONFERENCE NAECON 1981, Dayton Convention Center, 19-21 mai 1981, vol. 3, pages 1261-1268, IEEE, Dayton Section Aerospace and Electronics Systems Society, New York, US; R.L. BERRY et al.: "The lantirn wide field-of-view raster head-up display"
- OPTICAL ENGINEERING, vol. 24, no. 5, septembre/octobre 1985, pages 769-780, Society of Photo Optical Instrumentation Engineers, Bellingham, US; J.R. MAGARINOS et al.: "Holographic mirrors"

## Description

La présente invention concerne un viseur binoculaire, holographique et à grand champ.

On entend par viseur un dispositif dans lequel une image lumineuse collimatée est observée en superposition sur la vision du paysage extérieur. Une optique collimatrice renvoit à l'infini l'image lumineuse correspondant aux données à collimater ; ceci se traduit par l'absence d'effort d'accomodation pour l'oeil de l'observateur et un grand confort visuel. De manière conventionnelle, l'image lumineuse est renvoyée par une optique de combinaison vers l'observateur ; cette optique est traversée par le rayonnement provenant du paysage extérieur. Ainsi, l'observateur, tel le pilote d'un aéronef, voit en superposition sur le paysage l'image lumineuse collimatée correspondant, par exemple, à une image synthétique de données de pilotage.

Les techniques récentes dans le domaine des collimateurs tête haute sont dirigées essentiellement vers un accroissement du champ de vision instantanée de l'image collimatée, ainsi que vers l'obtention d'un rendement optique amélioré.

Une solution connue consiste à utiliser un miroir sphérique sur l'axe ce qui permet également de limiter les aberrations optiques. Suivant une réalisation de ce genre décrite dans la demande de brevet français publiée sous le N^{o}2 542 459, l'axe optique du miroir sphérique correspond à l'axe normal de vision de l'observateur dont l'oeil est placé au centre du miroir ; ce dernier est combiné avec un miroir plan semi-transparent qui a pour rôle de renvoyer l'axe optique du générateur d'image lumineuse vers le miroir sphérique côté concave lequel produit la collimation et renvoit l'image collimatée vers l'observateur. Pour accroître le rendement on utilise un miroir sphérique holographique qui réfléchit la longueur d'onde correspondant au générateur d'image qui peut consister en une visualisation à tube cathodique. Le principal inconvénient de cette solution est que le champ circulaire, bien qu'agrandi, reste cependant limité à des valeurs de l'ordre de 30° à 40° en vision monoculaire. Pour un accroissement plus important du champ on est amené à une utilisation hors d'axe du miroir sphérique car le miroir plan partiellement transparent se trouve alors trop rapproché de l'oeil de l'observateur ; il en résulte des aberrations optiques et des difficultés de mise en oeuvre.

Suivant une autre solution indiquée dans "Optical Engineering" de Sept./Oct. 1985/Vol. 24-N^{o}5/pages 769-780, article intitulé "Holographic mirrors", on utilise un miroir semi-transparent plan pour renvoyer l'axe du générateur d'images lumineuses vers l'oeil de l'observateur. Le rayonnement correspondant réfléchi par ce miroir traverse un miroir sphérique, lequel est suivi par un montage plan biréfringent perpendiculaire à l'axe optique du miroir sphérique correspondant à la direction normale de vision. L'utilisation de ce montage biréfringent coopère avec un polariseur en amont pour polariser le rayonnement de l'image lumineuse et permet de la récupérer ensuite après collimation par le miroir sphérique. On obtient ainsi une sélection de la voie du paysage et celle de l'imagerie en fonction de leur polarisation. Cette solution permet une augmentation du champ qui peut atteindre 60° vertical sur 135° horizontal en binoculaire (le champ monoculaire étant de 80° circulaire), mais elle n'est absolument pas performante du point de vue photométrique et pose des problèmes pour une utilisation en situation réelle. En effet, la transmission sur la voie optique d'observation du paysage est inférieure à 10% et celle sur la voie d'observation de l'image synthétique est limitée à 1,6% environ. Ceci résulte des pertes introduites sur les miroirs lors des multiples réflexions et transmissions, et par traversée des polariseurs. Il n'est pas possible d'utiliser un hologramme, le système étant totalement sur l'axe, les voies ne sont pas séparables par holographie.

Le but de l'invention est de remédier aux inconvénients précités et de réaliser un dispositif de visualisation avec un champ encore agrandi et un rendement énergétique important tout en constituant un système ergonomique. A titre indicatif, la solution proposée dans ce qui suit permet d'obtenir aisément, en vision binoculaire, un champ de l'ordre de 60° en site sur environ 120° en gisement, avec des rendements de l'ordre de 40% pour la voie image et 30% pour la voie paysage.

Un autre objet de l'invention est l'utilisation sur casque d'un viseur binoculaire conforme à l'invention.

Le but précité est atteint en réalisant un viseur binoculaire tel que défini par la revendication 1.

D'autres particularités et avantages de l'invention apparaîtront dans la description qui suit donnée à titre d'exemple, à l'aide des figures annexées qui représentent :
- Fig.1, un schéma en perspective d'un viseur binoculaire conforme à l'invention porté par un observateur ;
- Fig.2, un schéma général des éléments du viseur de la figure 1 intervenant pour chaque chaîne de vision monoculaire ;
- Fig.3, un schéma détaillé du trajet optique de la voie image d'une chaîne de vision monoculaire ;
- Fig.4, le schéma partiel de la figure 3 en vue de dessus pour montrer le cheminement correspondant des rayons dans ce plan ;
- Fig.5, un schéma représentatif du montage binoculaire et du recouvrement des champs, en vue de dessus ;
- Fig.6, un schéma correspondant à celui de la figure 5 pour illustrer le recouvrement de chaque zone de rendement photométrique nul par l'autre champ monoculaire, respectivement.
- Fig.7, un schéma de la partie optique collimatrice holographique relatif à un mode de réalisation ;
- Fig.8, un schéma relatif à une réalisation de l'optique relais.

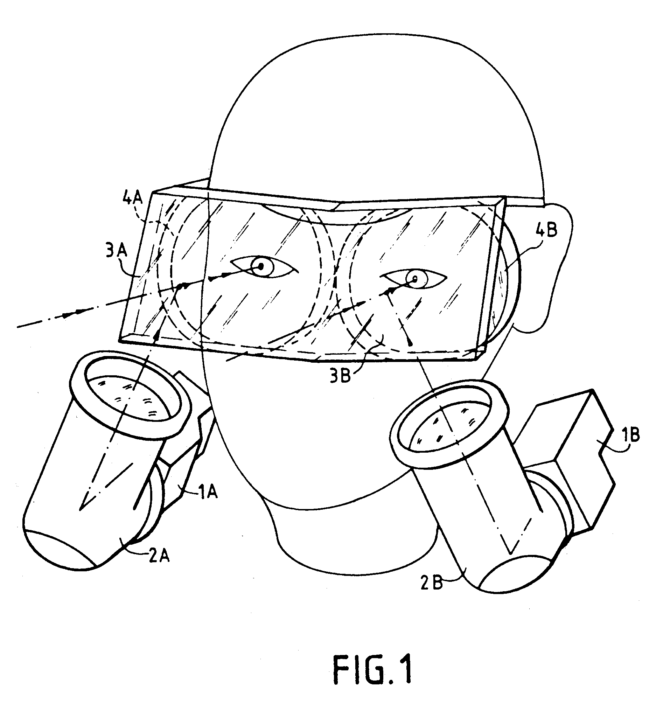

L'invention concerne un appareil viseur, adaptable sur casque, dont le champ binoculaire peut atteindre 60°x120° et dont l'allure générale en exploitation est indiquée sommairement sur la figure 1. Il se compose de deux parties semblables chacune assurant une vision monoculaire et comportant successivement : un générateur 1A-1B d'une image lumineuse à collimater, une formule optique relais 2A-2B, et un ensemble optique de collimation et de combinaison composé d'un élément optique mélangeur holographique 3A,3B, et de deux éléments optiques collimateurs holographiques 4A-4B.

L'élaboration de l'image peut être faite au moyen d'un tube cathodique miniature 1A-1B pour chaque oeil. Les images peuvent être identiques ou différentes. L'optique relais 2A-2B est coudée pour des raisons d'encombrement au moyen par exemple d'une structure prismatique. L'élément optique mélangeur 3A-3B est constitué à l'aide d'une lame plane qui assure la transmission de voie du paysage extérieur et la réflexion de la voie image issue du tube. La lame plane comporte un hologramme afin d'augmenter le rendement photométrique sur la voie du tube en ne réfléchissant que le spectre réduit de longueur d'onde correspondant à la voie image et en transmettant toutes les autres longueurs d'onde du spectre visible sans atténuation. L'optique collimatrice 4A-4B dite combineur dans ce qui suit, collimate à l'infini l'image venant de l'optique relais et réfléchie par la lame 3A-3B, et elle transmet sans modification le rayonnement lumineux de la voie paysage.

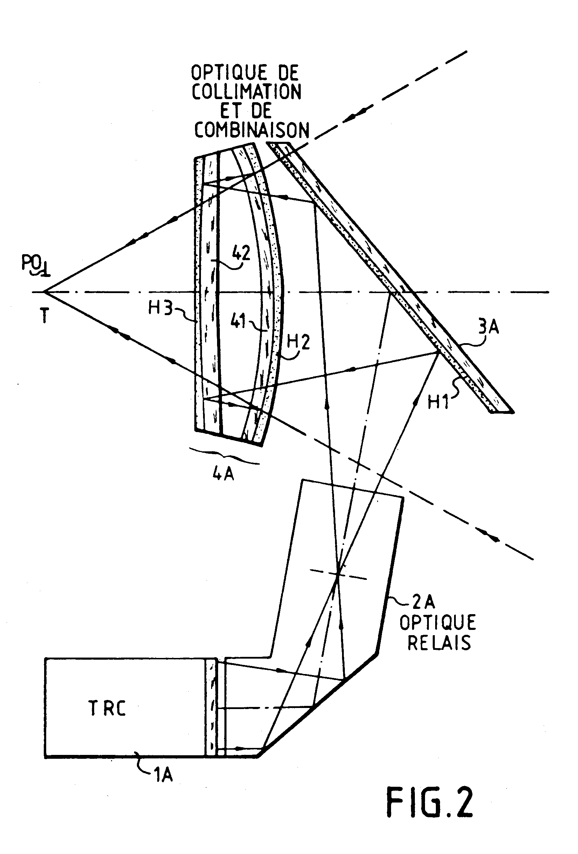

La figure 2 montre la combinaison des éléments intervenant en vision monoculaire. Sur ce schéma simplifié sont indiqués trois hologrammes H1,H2 et H3 posés respectivement sur la lame mélangeuse 3A et sur deux éléments optiques 41 et 42 constituant le combineur 4A. L'élément optique 41 a une forme sphérique ; l'élément optique 42 a une forme également sphérique mais de moindre courbure. L'ensemble forme une optique biconvexe utilisée sur l'axe.

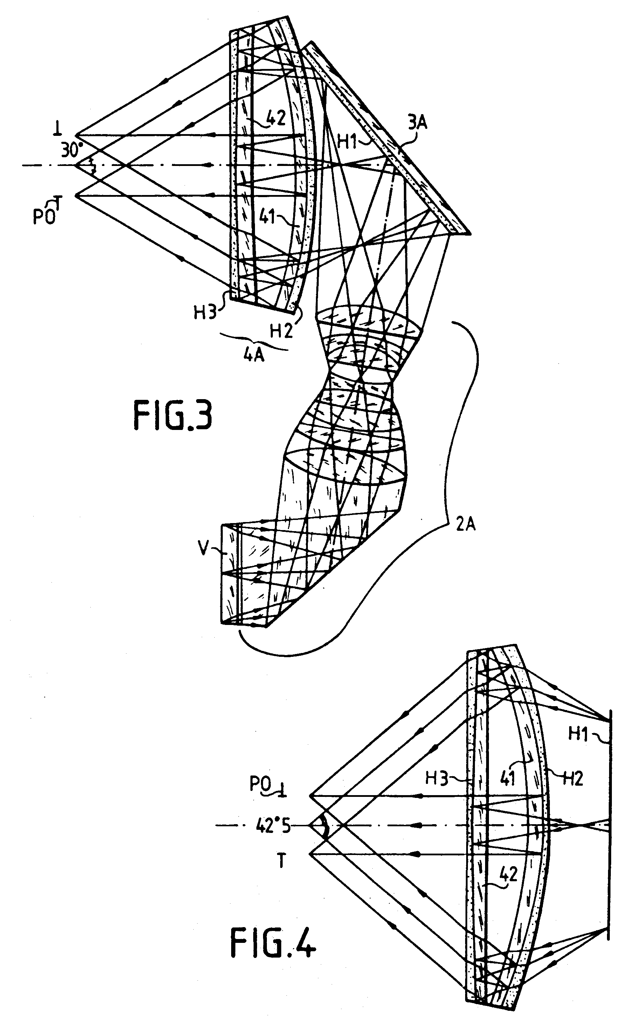

Les figures 3 et 4 illustrent le cheminement optique de la voie image pour chaque chaîne de vision monoculaire. Les rayons de champ sont représentés pour trois directions la direction axiale et deux directions symétriques par rapport à la direction axiale. On remarque que la direction de l'axe central ou axe optique du système, ne subit pas de collimation. Ceci entraîne une zone de rendement photométrique nul et donc un trou noir dans le champ monoculaire. Ce défaut est compensé par le recouvrement des champs en binoculaire, comme on le verra ultérieurement. La pupille de l'oeil Pₒ (plus précisément il s'agit de la boîte à oeil, c'est-à-dire de la zone où l'on peut déplacer l'oeil sans altérer la vision) est conjuguée de la pupille de l'optique relais. Le champ en site représenté sur la figure 3A correspond à ± 30° et celui en gisement apparaisssant sur la figure 4 en vue de dessus est de ± 42,5° soit 85° latéral pour 60° de haut en vision monoculaire.

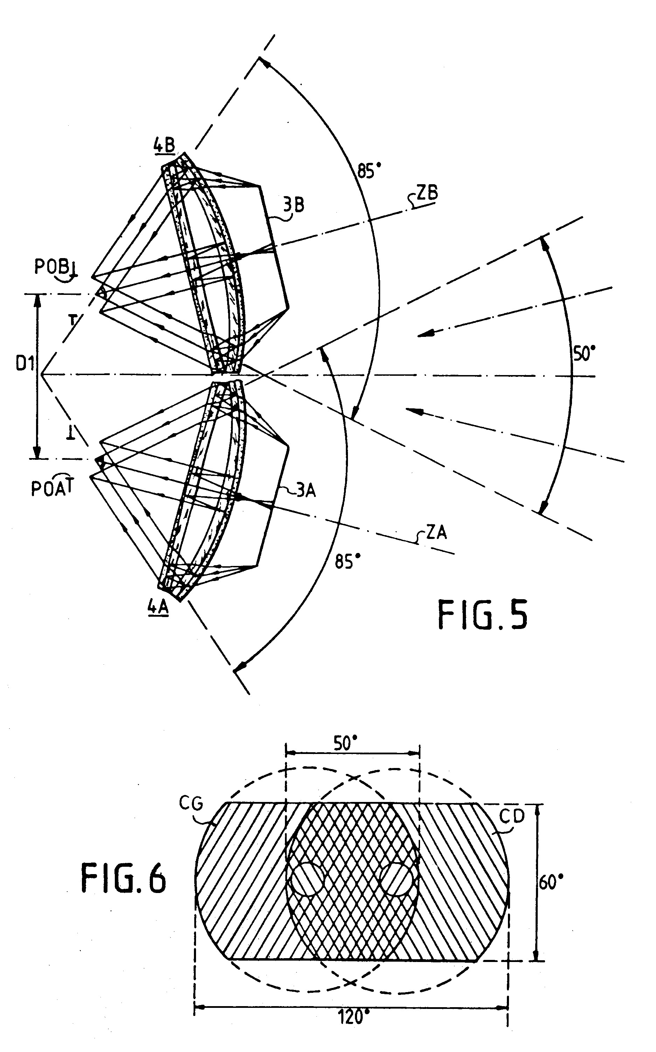

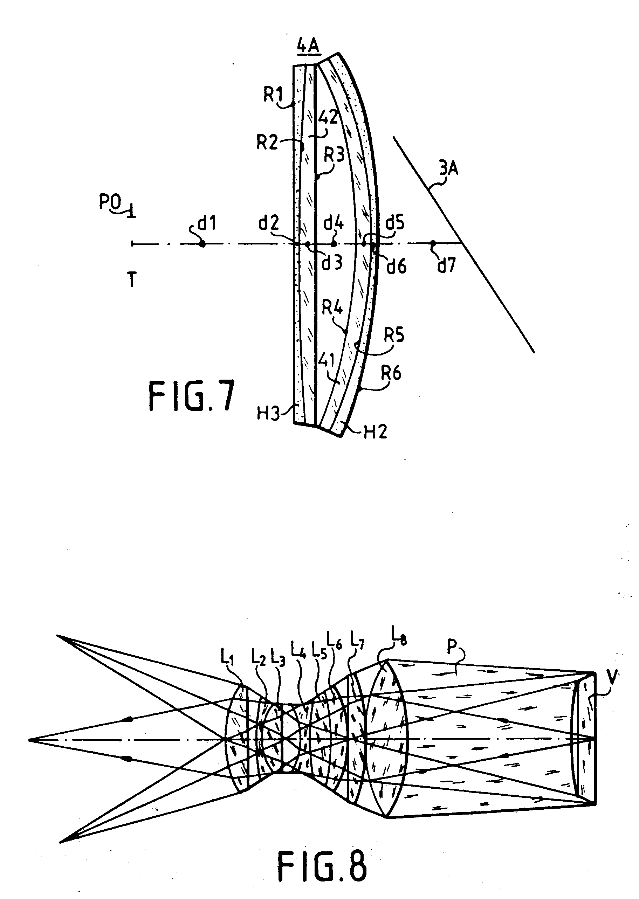

La figure 5 illustre le recouvrement des champs en vision binoculaire les yeux étant à la distance D1 de l'ordre de 6,5cm, les optiques de collimation 4A-4B étant disposées comme représentées, faisant entre elles un angle assurant le recouvrement désiré, par exemple de 50° dans la réalisation concernée, de manière à couvrir le trou noir axial relatif à la vision monoculaire de l'autre oeil comme l'illustre la figure 6. Les champs nonoculaires gauche et droite, de forme circulaire, y sont référencés CG et CD. Le tronquage en hauteur résulte de la taille et des dimensions des lames mélangeuses 3A-3B placées en amont (voir Fig.1).

Les caractéristiques optiques du viseur sont les suivantes pour la réalisation considérée : champ monoculaire circulaire de 85° ; champ binoculaire 60° en vertical par 120° en horizontal ; pupille d'oeil Pₒ considérée de 15mm de diamètre ; rendement sur la voie image ou voie du tube 40%, rendement sur la voie du paysage 30% ; diamètre de la tache sur la voie image 1,5mrd environ au centre du champ monoculaire à 3,5mrd environ à 40°. Le viseur selon l'invention présente un haut rendement photométrique, tant sur la voie image que sur celle du paysage. Cette nette amélioration résulte essentiellement de l'utilisation du combineur collimateur holographique 4A-4B.

Le combineur holographique 4A-4B se comporte comme un système afocal sur la voie du paysage c'est-à-dire de la vision extérieure. Sa focale est déterminée en fonction de l'encombrement sur la voie image. Les aberrations sur la voie image et la distorsion sur la voie paysage sont minimisées. Les rendements photométriques sur les deux voies sont maximisés, ainsi que le diamètre de la pupille ou boîte à oeil Pₒ.

L'architecture du combineur apparaît sur les figures 3 et 4. Le combineur est constitué de deux hologrammes diffractant par réflexion les rayons venant du tube générateur d'image qui correspondent donc a une longueur d'onde fixée ou à une bande spectrale très réduite, sont transmis par l'hologramme H2, ensuite diffractés par réflexion par l'hologramme H3, puis diffractés par réflexion par l'hologramme H2, et enfin transmis par l'hologramme H3. Ceci est rendu possible par le fait qu'un hologramme est un composant optique qui, à longueur d'onde fixée, diffracte les rayons tombant à une incidence donnée et transmet sans transformation le rayonnement tombant aux autres incidences. Les rayons venant du paysage qui contiennent les longueurs d'onde du spectre visible sont transmis par l'hologramme H2 puis par l'hologramme H3. Ceci est dû au fait, qu'à incidence fixée, un hologramme ne diffracte que les rayons d'une longueur d'onde fixée et transmet sans transformation les rayons des autres longueurs d'onde. Ainsi le spectre visible est quasi-intégralement transmis à l'exception du spectre restreint affecté à la diffraction de la voie d'image.

Sur la voie image, au centre de chaque champ monoculaire, la zone de rendement photométrique nul crée un trou dans le champ de 14° de diamètre environ. L'utilisation en binoculaire avec le recouvrement de champ indiqué à l'aide des figures 5 et 6 permet de remédier à ces deux trous de rendement nul. De plus, afin d'accroître le rendement photométrique du combineur sur la pupille, la modulation d'indice de chacun des deux hologrammes H2 et H3 peut être réalisée variable suivant le point considéré sur ces hologrammes. Les hologrammes H2 et H3 sont du type miroir c'est-à-dire qu'ils n'agissent qu'en tant que filtres interférentiels. La fonction optique d'un tel hologramme est égale à celle de son support. L'hologramme miroir est réalisé de manière connue, en disposant la couche de matériau photosensible à enregistrer entre une lame de verre qui constitue son support et un miroir d'enregistrement de même courbure. Un liquide adaptateur d'indice peut être prévu entre le matériau photosensible et le miroir.

La figure 7 indique les paramètres à considérer pour un exemple de réalisation du combineur. Ces paramètres sont les rayons de courbure R1 à R6 et les positions sur l'axe optique d1 à d7 des différentes lames du combineur c'est-à-dire les supports 41 et 42 en verre, ou matériau transparent, et les hologrammes H2 et H3. La distance d1 correspond à la distance entre la pupille de l'oeil Pₒ et l'hologramme H3. De même la distance d7 représente la distance entre l'hologramme H2 et la lame mélangeuse 3A. Les positions d1 à d7 sont successivement axiales. Elles sont indiquées ci-après ainsi que les rayons R1 à R6, les dimensions sont en millimètres :

| | |
|---|---|
| d₁ = 38 | R₁ = 3100 |
| d₂ = 1 | R₂ = 530 |
| d₃ = 4 | R₃ = 6000 |
| d₄ = 10 | R₄ = 100 |
| d₅ = 4 | R₅ = 93 |
| d₆ = 1 | R₆ = 110 |
| d₇ = 20 | |

La lame plane holographique 3A ou 3B assure le mixage entre la voie du paysage et celle du tube. L'hologramme utilisé est également du type miroir. La lame est inclinée par rapport à l'axe du combineur, par exemple de 40 à 45°.

La figure 8, représente en développé l'optique relais 2A déjà visible en détail sur la figure 3 et qui assure le transport de l'image du tube 1A vers le combineur 4A après réflexion sur la lame plane holographique 3A. Cette optique compense les aberrations résiduelles du combineur. Pour la réalisation proposée, elle se compose d'un montage de huit lentilles et d'un prisme. Le premier élément L1 constitue un ménisque convergent. Vient ensuite un doublet L2, L3 groupant un ménisque divergent et un ménisque convergent ; on trouve ensuite un triplet L4,L5,L6 constitué d'une lentille biconcave L4, une lentille biconvexe L5 et d'un ménisque convergent L6. L'élément L7 est un ménisque convergent et l'élément L8 une lentille biconvexe. Le prisme terminal P permet le repli du trajet optique et est terminé par des faces courbes venant épouser d'un côté le dioptre sphérique correspondant de la lentille L8 et se situant de l'autre côté devant l'écran du tube dont l'épaisseur de verre est représentée par la pièce terminale V.

Le viseur binoculaire proposé permet un grand champ d'observation ; il peut être monté sur un casque. Les applications essentielles envisagées sont l'aide à la navigation des pilotes d'avions ou d'hélicoptères, ainsi que la simulation de pilotage.

Le générateur d'image 1A ou 1B peut être réalisé différemment, avec une matrice à cristaux liquides par exemple.

## Revendications

1. Viseur binoculaire utilisable sur casque, comprenant deux dispositifs collimateurs, chacun assurant la vision monoculaire, chaque dispositif collimateur présentant un axe optique et comprenant : en série du point de vue optique un générateur d'image (1A-1B ; V), une optique relais (2A), un élément optique mélangeur (3A-3B), pour transmettre la voie du paysage et réfléchir la vole image, constitué par une lame et comportant un premier hologramme (H1) et un combineur (4A-4B), pour transmettre les deux voies avec collimation de la voie image, constitué d'un premier (41) et d'un second (42) élément optique combineur, successifs, dont le premier (41) présente une surface sphérique, où le premier et le second élément optique combineur ont chacun un axe optique confondu avec l'axe optique du dispositif collimateur, comportent respectivement un second (H2) et un troisième (H3) hologramme, ce second et ce troisième hologramme formant un ensemble qui fonctionne comme un élément optique normal biconvexe, et où le rayonnement de la voie image est réfléchi par l'élément optique mélangeur (3A-3B) puis transmis par le second hologramme (H2), diffracté par le troisième hologramme (H3), diffracté à nouveau par le second hologramme (H2) et enfin transmis par le troisième hologramme (H3) vers l'observateur à l'exception du rayonnement axial qui produit une zone de rendement photométrique nul.

2. Viseur selon la revendication 1, caractérisé en ce que le premier hologramme (H1) est déterminé pour assurer une transmission optimale de la voie paysage et une réflexion optimale du spectre limité correspondant à la voie image, et que les hologrammes (H2,H3) des éléments optiques combineurs (4A-4B) produisent la diffraction par réflexion dans une bande spectrale délimitée correspondant à la voie image et la transmission quasi intégrale du visible de la voie paysage.

3. Viseur selon la revendication 1, caractérisé en ce que le combineur (4A,4B) est constitué par des supports (41,42) en matériau transparent et par le second (H2) et le troisième (H3) hologramme dont les positions et épaisseurs axiales et rayons de courbure sont les suivants, exprimés en millimètres :
| | |
|---|---|
| d₁ = 38 | R₁ = 3100 (H3) |
| d₂ = 1 (H3) | R₂ = 530 (H3-42) |
| d₃ = 4 (42) | R₃ = 6000 (42) |
| d₄ = 10 | R₄ = 100 (41) |
| d₅ = 4 (41) | R₅ = 93 (41-H2) |
| d₆ = 1 (H2) | R₆ = 110 (H2) |
| d₇ = 20 | |
d1 étant la position du troisième hologramme (H3) par rapport à la pupille d'observation (P₀) et d7 la position du second hologramme (H2) par rapport à la lame (3A,3B).

4. Viseur selon l'une quelconque des revendications précédentes, caractérisé en ce que les combineurs (4A-4B) des deux dispositifs collimateurs sont décalés angulairement de manière à produire des recouvrements de champ (CG,CD) qui éliminent l'effet de rayonnement axial non collimaté dans chaque champ de vision monoculaire.

5. Viseur selon l'une quelconque des revendications précédentes, caractérisé en ce que les hologrammes (H1,H2,H3) sont du type miroir.

6. Viseur selon l'une quelconque des revendications précédentes, caractérisé en ce que les hologrammes (H2,H3) du combineur sont à modulation d'indice variable.

7. Viseur selon l'une quelconque des revendications précédentes, caractérisé en ce que l'optique relais (2A,2B) compense les aberrations résiduelles du combineur et est constituée au moyen de huit lentilles et d'un prisme de repli, les lentilles comportant un ménisque convergent (L1), un doublet (L2,L3), un triplet (L4,L5,L6) un ménisque convergent (7) et une lentille biconvexe (L8), le prisme (P1) étant terminé par des surfaces courbes dont l'une épouse une face correspondante de la lentille biconvexe (L8), l'autre face courbe étant placée en vis-à-vis du générateur d'image (V).

## Claims

1. A binocular visor usable on a helmet, comprising two collimating devices, each giving monocular vision, each collimating device having an optical axis and comprising: in series from the optical point of sight, an image generator (1A-1B; V), relay optics (2A), a mixing optical element (3A-3B), to transmit the landscape path and reflect the image path, composed of a plate and comprising a first hologram (H1) and a combiner (4A-4B) to transmit the two paths with collimation of the image path, constituted of a first (41) and a second (42) combining optical element, in succession, the first (41) of which has a spherical surface, where the first and the second combining optical element each have an optical axis merged with the optical axis of the collimation device, comprising respectively a second (H2) and a third (H3) hologram, this second and this third hologram forming a unit which functions as a normal biconvex optical element, and where the radiation of the image path is reflected by the mixing optical element (3A-3B) then transmitted by the second hologram (H2), diffracted by the third hologram (H3), diffracted once more by the second hologram (H2) and finally transmitted by the third hologram (H3) towards the observer with the exception of the axial radiation which produces a zone of zero photometric yield.

2. A visor according to Claim 1, characterised in that the first hologram (H1) is determined so as to ensure optimal transmission of the landscape path and optimal reflection of the limited spectrum corresponding to the image path, and that the holograms (H2, H3) of the combining optical elements (4A-4B) produce diffraction by reflection in a delimited spectral band corresponding to the image path and the almost complete transmission of the visible part of the landscape path.

3. A visor according to Claim 1, characterised in that the combiner (4A, 4B) is composed of carriers (41, 42) made of transparent material and by the second (H2) and the third (H3) hologram, the positions and axial thicknesses and radii of curvature of which are as follows, expressed in millimetres:
| | |
|---|---|
| d₁ = 38 | R₁ = 3100 (H3) |
| d₂ = 1 (H3) | R₂ = 530 (H3-42) |
| d₃ = 4 (42) | R₃ = 6000 (42) |
| d₄ = 10 | R₄ = 100 (41) |
| d₅ = 4 (41) | R₅ = 93 (41-H2) |
| d₆ = 1 (H2) | R₆ = 110 (H2) |
| d₇ = 20 | |
d₁ being the position of the third hologram (H3) relative to the observer's pupil (P₀) and d₇ the position of the second hologram (H2) relative to the plate (3A, 3B).

4. A visor according to any one of the preceding claims, characterised in that the combiners (4A-4B) of the two collimating devices are angularly offset so as to produce overlapping of fields (CG, CD) which eliminates the effect of non-collimated axial radiation in each field of monocular vision.

5. A visor according to any one of the preceding claims, characterised in that the holograms (H1, H2, H3) are of the mirror type.

6. A visor according to any one of the preceding claims, characterised in that the holograms (H2, H3) of the combiner are the variable index modulation type.

7. A visor according to any one of the preceding claims, characterised in that the relay optics (2A, 2B) compensate the residual aberrations of the combiner and are constituted by means of eight lenses and a bending prism, the lenses comprising a convergent meniscus (L1), a doublet (L2, L3), a triplet (L4, L5, L6), a convergent meniscus (7) and a biconvex lens (L8), the prism (P1) being terminated by curved surfaces, one of which fits against a corresponding face of the biconvex lens (L8), the other curved face being placed opposite the image generator (V).

## Patentansprüche

1. Binokulare Visiereinrichtung, die an einem Helm angebracht werden kann, mit zwei Kollimatoreinichtungen, wovon jede ein monokulares Sehen ermöglicht, wobei jede Kollimatoreinrichtungen eine optische Achse aufweist und aufeinanderfolgend, beginnend beim optischen Augenpunkt, umfaßt: einen Bildgenerator (1A-AB; V), eine Übertragungsloptik (2A), ein optisches Mischerelement (3A-3B), das den Lichtweg von der Landschaft durchläßt und den Bild-Lichtweg reflektiert, aus einem Plättchen gebildet ist und ein erstes Hologramm (H1) enthält, und einen Vereiniger (4A-4B), der die zwei Lichtwege bei Kollimation des Bild-Lichtweges durchläßt und von einem ersten (41) und einem zweiten (42) optischen Vereinigerelement, die hintereinander angeordnet sind, gebildet ist, wovon das erste (41) eine sphärische Oberfläche aufweist, wobei das erste und das zweite optische Vereinigerelement jeweils eine mit der optischen Achse der Kollimatoreinrichtungen zusammenfallende optische Achse besitzen und ein zweites (H2) bzw. ein drittes (H3) Hologramm aufweisen, wobei dieses zweite und dieses dritte Hologramm eine Anordnung bilden, die als bikonvexes normales optisches Element wirkt, und wobei die Strahlung des Bild-Lichtweges durch das optische Mischerelement (3A-3B) reflektiert wird, dann vom zweiten Hologramm (H2) durchgelassen wird, vom dritten Hologramm (H3) abgelenkt wird, vom zweiten Hologramm (H2) erneut abgelenkt wird und schließlich mit Ausnahme der axialen Strahlung, die eine Zone mit der photometrischen Leistung Null erzeugt, zum Beobachter durchgelassen wird.

2. Visiereinrichtung gemäß Anspruch 1, dadurch gekennzeichnet, daß das erste Hologramm (H1) dazu bestimmt ist, einen optimalen Durchlaß des Landschafts-Lichtweges und eine optimale Reflexion des dem Bild-Lichtweg entsprechenden begrenzten Spektrums zu gewährleisten, und daß die Hologramme (H2, H3) der optischen Vereinigerelemente (4A-4B) die Ablenkung durch Reflexion in einem dem Bild-Lichtweg entsprechenden beschränkten Spektralband und den fast vollständigen Durchlaß des betrachteten Landschafts-Lichtweges erzeugen.

3. Visiereinrichtung gemäß Anspruch 1, dadurch gekennzeichnet, daß der Vereiniger (4A, 4B) aus Trägern (41, 42) aus lichtdurchlässigem Material und durch das zweite (H2) und das dritte (H3) Hologramm gebildet ist, deren axiale Positionen und Dicken und deren Krümmungsradien, ausgedrückt in Millimetern, die folgenden sind:
| | |
|---|---|
| d₁ = 38 | R₁ = 3100 (H3) |
| d₂ = 1 (H3) | R₂ = 530 (H3-42) |
| d₃ = 4 (42) | R₃ = 6000 (42) |
| d₄ = 10 | R₄ = 100 (41) |
| d₅ = 4 (41) | R₅ = 93 (41-H2) |
| d₆ = 1 (H2) | R₆ = 110 (H2) |
| d₇ = 20 | |
wobei d₁ die Position des dritten Hologramms (H3) in bezug auf die Beobachtungspupille (P₀) ist und d₇ die Position des zweiten Hologramms (H2) in bezug auf das Plättchen (3A, 3B) ist.

4. Visiereinrichtung gemäß einem der vorangehenden Ansprüche, dadurch gekennzeichnet, daß die Vereiniger (4A-4B) der zwei Kollimatoreinrichtungen winkelmäßig zueinander versetzte sind, derart, daß Feldüberlappungen (CG, CD) erzeugt werden, die in jedem monokularen Gesichtsfeld die Wirkung der nicht kollimatierten axialen Strahlung beseitigen.

5. Visiereinrichtung gemäß einem der vorangehenden Ansprüche, dadurch gekennzeichnet, daß die Hologramme (H1, H2, H3) vom Spiegeltyp sind.

6. Visiereinrichtung gemäß einem der vorangehenden Ansprüche, dadurch gekennzeichnet, daß die Hologramme (H2, H3) des Vereinigers vom Typ mit variabler Brechungsindex-Modulation sind.

7. Visiereinrichtung gemäß einem der vorangehenden Ansprüche, dadurch gekennzeichnet, daß die Übertragungsoptik (2A, 2B) Restaberrationen des Vereinigers kompensiert und mittels acht Linsen und eines Umlenkprismas aufgebaut ist, wobei die Linsen eine konvergente Meniskuslinse (L1), ein Duplett (L2, L3), ein Triplett (L4, L5, L6), eine konvergente Meniskuslinse (7) und eine bikonvexe Linse (L8) umfassen, wobei das Prisma (P1) in gekrümmten Flächen endet, von denen sich eine an eine entsprechende Fläche der bikonvexen Linse (L8) anschmiegt, während die andere gekrümmte Fläche gegenüber dem Bild-Generator (V) angeordnet ist.
